# EUROPEAN PATENT APPLICATION

(11) **EP 3 379 055 A1**
(43) Date of publication of application: **26.09.2018**
(21) Application number: 18159878.0
(22) Date of filing: 05.03.2018
(51) Int. Cl.: F02C 7/06

(54) **GAS TURBINE ENGINE**

(30) Priority: 22.03.2017 GB 201704502
(71) Applicant: Rolls-Royce plc, London SW1E 6AT (GB)
(72) Inventor: Pointon, James, Derby, Derbyshire DE24 8BJ (GB); Bradbrook, Stephen, Derby, Derbyshire DE24 8BJ (GB)
(74) Representative: Rolls-Royce plc

(57) **Abstract**

An aircraft gas turbine engine (10) comprises a high pressure compressor (20) coupled to a high pressure turbine (24) by a high pressure shaft (32), and a low pressure compressor (18) coupled to a low pressure turbine (26) by a low pressure shaft (34). The engine (10) includes a first shaft bearing (38) supporting a forward end of the low pressure shaft (34) and being mounted to a static structure (58) forward of the high pressure turbine (24). The engine also includes a second shaft bearing (64) supporting a rearward end of the low pressure shaft (34) and being mounted to a static structure (70) between the high pressure (24) and the low pressure turbine (26). The engine further includes a third shaft bearing (74) supporting the rearward end of the low pressure shaft (34) and being mounted to a static structure (76) rearward of the low pressure turbine (26).

## Description

The present disclosure concerns a geared aircraft gas turbine engine.

Aircraft gas turbine engines typically comprise a gas turbine engine core and a core driven fan enclosed within a fan nacelle. Air flows through the fan in use, and is divided into two airflows downstream - a bypass flow and a core flow. The ratio between the mass flow of air in the bypass flow to the airflow of the core flow is known as the bypass ratio. At subsonic flight velocities, a large bypass ratio is desirable for high propulsive efficiency.

Gas turbine engine efficiency can also be increased by increasing the Overall Pressure Ratio (OPR). High OPR results in high thermal efficiency, and so low fuel consumption. A high OPR can be achieved by increasing the number of compressor stages.

However, high OPR engine cores (having a large number of compressor stages) and / or high bypass ratios can result in relatively long, thin engine cores in which the compressors and turbines are interconnected by long, thin shafts.

Typically, modern gas turbine engines comprise at least two main engine spools - a "high pressure" spool comprising a high pressure compressor and turbine interconnected via a high pressure shaft, and a "low pressure" spool comprising a low pressure compressor, turbine and fan interconnected via a low pressure shaft. In some cases, the fan may be connected to the low pressure turbine via a reduction gearbox.

The high and low pressure spools are co-axial, with the low pressure shaft extending through the centre of the high pressure shaft, and extending axially either side. Consequently, the location of bearings to provide support for the low pressure and high pressure spools is constrained.

Typically, in a two spool engine, the low pressure spool is supported by two bearings - one located adjacent the low pressure compressor, and a second located adjacent the low pressure turbine. However, such an arrangement results in a spool that is relatively flexible in the radial direction. Consequently, compressor and turbine rotor tip clearances may be adversely affected by radial displacements due to shaft flexing, and vibration (shaft whirl) and fatigue may be induced. Alternatively, in order to provide the necessary stiffness, a relatively stiff and therefore heavy shaft may be required.

The present invention seeks to provide an aircraft gas turbine engine that seeks to ameliorate or overcome some or all of these issues.

According to a first aspect there is provided an aircraft gas turbine engine comprising:
a high pressure compressor coupled to a high pressure turbine by a high pressure shaft;
a low pressure compressor coupled to a low pressure turbine by a low pressure shaft;
a first shaft bearing configured to at least partially support a forward end of the low pressure shaft, the first shaft bearing being mounted to a static structure forward of the high pressure turbine;
a second shaft bearing configured to at least partially support a rearward end of the low pressure shaft, the second shaft bearing being mounted to a static structure rearward of the high pressure turbine, and forward of the low pressure turbine; and
a third shaft bearing configured to at least partially support the rearward end of the low pressure shaft, the third shaft bearing being mounted to a static structure rearward of the low pressure turbine.

Accordingly, the bearing arrangement of the present invention provides three bearing supports supporting the low pressure shaft, the supports being spaced from one another so that radial movement of the shaft is constrained at three axial locations. Consequently, overall bending is reduced, and so the shaft can be lighter weight and / or can have reduced bending in use.

The first shaft bearing may comprise a thrust bearing configured to axially constrain the low pressure shaft. The first shaft bearing may be in the form of a ball bearing assembly.

The second and / or third shaft bearing may be in the form of a roller bearing configured to permit axial movement of the rearward end of the low pressure shaft. Consequently, the low pressure shaft is supported, whilst allowing for thermal expansion of the shaft in the axial direction.

The first shaft bearing may be mounted to an inter-compressor casing, the inter-compressor casing being located axially between the high pressure compressor and the low pressure compressor.

The first shaft bearing may be located at an axial position corresponding to the inter-compressor casing.

The first shaft bearing may be mounted to the inter-compressor casing by a first bearing mounting arrangement comprising a support element cantilevered from the inter-compressor casing to the first shaft bearing.

The second shaft bearing may be mounted to an inter-turbine casing, the inter-turbine casing being located axially between the high pressure turbine and the low pressure turbine.

The second shaft bearing may be mounted to the inter-turbine casing by a second bearing mounting arrangement comprising a support element cantilevered from the inter-turbine casing to the second shaft bearing. Consequently, the axial distance between the first and second shaft bearings is minimised.

The third shaft bearing may be mounted to a turbine exhaust casing, the turbine exhaust casing being located axially rearwardly of the low pressure turbine.

The third shaft bearing may be mounted to the turbine exhaust casing by a third bearing mounting arrangement comprising a support element cantilevered from the turbine exhaust casing to the third shaft bearing. Consequently, the second and third shaft bearing mountings are axially spaced.

The engine may comprise a fan arranged to be driven by the low pressure shaft. The fan may be directly coupled to the low pressure shaft, or may be driven by the low pressure shaft via a reduction gearbox. The present invention has been found to be particularly suitable for an aircraft gas turbine engine having a fan driven by the low pressure shaft via a reduction gearbox. This is because the reduction gearbox allows for a relatively slow turning fan, while maintaining a high rotational speed low pressure turbine and shaft. Consequently, the torque carried by the low pressure shaft is reduced for a given power, allowing for a low pressure shaft having a reduced diameter compared to a direct drive engine of the same power rating. This in turn may result in increased shaft whirl, which is ameliorated by the bearing arrangement of the present disclosure.

The engine may be configured to provide an overall pressure ratio of between 40 and 80 in use.

The low pressure compressor may be configured to provide a pressure ratio in use of between 2 and 4.

The high pressure compressor may be configured to provide a pressure ratio in use of between 10 and 30.

The ratio of the pressure rise provided by the high pressure compressor to the pressure rise provided by the low pressure compressor may be between 2 and 18.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a first gas turbine engine;
**Figures 2a****-b** are schematic representations of shafts supported by either two or three bearings;
**Figure 3** is a schematic representation of a second gas turbine engine; and
**Figure 4** is a schematic representation of a bearing arrangement suitable for the gas turbine engine of figure 1 or figure 3.

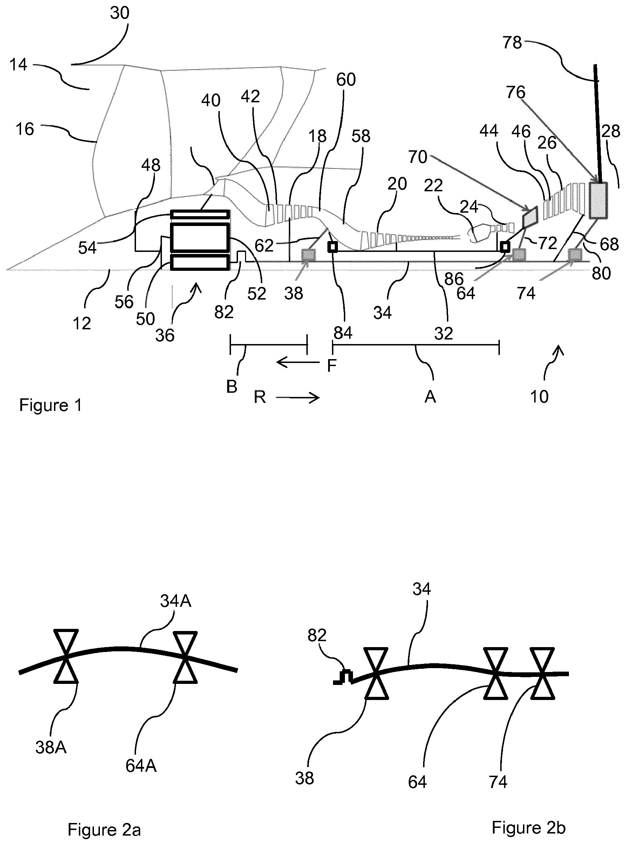

With reference to Figure 1, a gas turbine engine is generally indicated at 10, having a principal and rotational axis 12, which defines forward F and rearward R axial directions. The engine 10 comprises, in axial flow series, an air intake 14, a propulsive fan 16, a low pressure compressor 18, a high-pressure compressor 20, combustion equipment 22, a high-pressure turbine 24, a low-pressure turbine 26 and an exhaust nozzle 28. A nacelle 30 generally surrounds the engine 10 and defines the intake 14. In the combustion equipment 15 the air flow is mixed with fuel and the mixture combusted. The resultant hot combustion products then expand through, and thereby drive the high and low-pressure turbines 16, 17 before being exhausted through the nozzle 18 to provide additional propulsive thrust.

The gas turbine engine 10 works in the conventional manner so that air entering the intake 12 is accelerated by the fan 13 to produce two air flows: a first air flow into the high-pressure compressor 14 and a second air flow which passes through a bypass duct 21 to provide propulsive thrust. The high-pressure compressor 14 compresses the air flow directed into it before delivering that air to the combustion equipment 15.

Each compressor 18, 20 is in the form of an axial flow compressor, having one or more compressor stages, each compressor stage comprising a rotating rotor 40, and a static stator 42. In general, the number of compressor stages is selected such that a desired overall pressure ratio (OPR) is provided by the compressor. In the first described embodiment, a total of thirteen compressor stages are provided, in order to provide a high overall pressure greater than 50:1. The low pressure compressor 18 provides three of these stages, while the high pressure compressor provides the remaining ten. Consequently, the compressor section is relatively long.

Similarly, in order to absorb the energy in the exhaust gas stream, a high turbine expansion ratio is desired. Again, each turbine 24, 26 comprises one or more turbine stages, each stage comprising a rotor 44 and a stator 46. In this embodiment, the high pressure turbine comprises two turbine stages, and the low pressure turbine comprises four turbine stages.

The reduction gearbox 36 is provided forwardly of the low pressure compressor, and is configured to couple power from the low pressure turbine input shaft 34, to an output fan shaft 48 at a lower rotational speed. The gearbox includes a sun gear 50 which meshes with a plurality of planet gears 52, which in turn mesh with a ring gear 54. The ring gear 54 is held static, while the planet gears rotate and orbit around the sun gear 50, and are held by a planet carrier 56. The planet carrier 56 is coupled to the fan input shaft 48, to thereby drive the fan 16.

Referring again to figure 1, the high pressure compressor 20 is coupled to the high pressure turbine 24 by a high pressure shaft 32. Similarly, the low pressure compressor 18 is coupled to the low pressure turbine 26 by a low pressure shaft 34. The low pressure shaft 34 also drives the propulsive fan 14 via a reduction gearbox 36. The low pressure and high pressure shafts 32, 34 are coaxial, with the low pressure shaft 34 being provided radially inwardly of the high pressure shaft 32, and extending forwardly and rearwardly of the high pressure shaft 32.

Consequently, each of the shafts 32, 34 rotates about the common rotational axis 12.

In view of the large number of compressor and turbine stages (necessitated by the high OPR)and the provision of the gearbox forward of the low pressure compressor 18, the low pressure shaft 34 is relatively long. In addition, an unsupported region A is defined by the length of the high pressure shaft 32, since the support for the low pressure shaft 32 must be provided forwardly of and rearwardly of the high pressure shaft 32, in view of the coaxial shaft arrangement. Consequently, radial loads on the low pressure shaft 32 (such as loads due to imbalance) would ordinarily result in large radial displacements (i.e. bending).

In order to avoid excessive low pressure shaft bending, the low pressure shaft 34 is supported by a bearing arrangement, which radially supports both ends of the shaft 34, as well as reacting forward (axial) load produced by the fan 16 and low pressure compressor 18, and rearward (axial) load produced by the low pressure turbine 26.

The bearing arrangement includes a first low pressure shaft bearing 38 in the form of a thrust bearing, described in further detail below.

The thrust bearing 38 is capable of reacting forward load from the fan 16, and provide radial support to a forward end of the low pressure shaft 34. The first bearing 38 is provided at an axial position corresponding to an axial position of the low pressure compressor 18, radially inwardly thereof. In this embodiment, the first bearing 38 is provided at the axial position of the final stage of the low pressure compressor 18.

The first bearing 38 is mounted to an inter-compressor casing 58, which is located axially between the low pressure compressor 18 and high pressure compressor 20. The inter-compressor casing 58 is a static component, and so does not rotate with the shaft 34 in use, and is in turn coupled to an engine core casing 60.

The first bearing 38 is mounted to the inter-compressor casing 58 by a mounting arrangement comprising a support arm 62. The support arm extends radially inwardly and axially forwardly from the inter-compressor casing 58 to the thrust bearing 38, such that the bearing 38 is cantilevered forwardly and inwardly from the inter-compressor casing 58. Consequently, the first bearing 38 is mounted to the static engine core casing 60 via the inter-compressor casing 58 and support arm 62.

In view of this arrangement, the shaft 34 is supported by the bearing 38 at a position relatively far forward, near the gearbox 36, thereby minimising an unsupported region B between the first bearing 38 and the sun gear 50.

The bearing arrangement further comprises a second bearing 64 in the form of a roller bearing. The roller bearing 64 is configured to provide radial support of the low pressure shaft 34, but allow some axial movement to accommodate thermal growth of the shaft 34.

The second bearing 64 is provided radially inwardly of the high pressure turbine 24, and in this embodiment, is provided rearward of the high pressure turbine 24. This location has a relatively high temperature in view of its position adjacent the high pressure turbine 24, but minimises the axial length of the unsupported region A.

The second bearing 64 is mounted to static structure in the form of an inter-turbine casing 70 provided axially between the high pressure turbine 24 and low pressure turbine 26. The inter-turbine casing is again coupled to the engine core casing 60. The inter-turbine casing 70 is coupled to the second bearing 64 by a mounting arrangement comprising a support arm 72, which extends radially inwardly from the inter-turbine casing 70 to the bearing 64, such that the bearing 64 is cantilevered inwardly from the inter-turbine casing 70. Consequently, the second bearing 64 is mounted to the static engine core casing 60 via the inter-turbine casing 70 and support arm 72.

In a conventional bearing arrangement, positioning of a bearing supporting the rear of the low pressure shaft 34 at such a relatively far forward position would leave a large unsupported region rearward of the bearing. Furthermore, since the engine mounting is generally provided coupled to the rear of the engine, stresses would be imposed on the low pressure turbine casing.

However, in the disclosed design, a third support bearing 74 is provided to partially support the rearward end of the low pressure shaft 34, and is axially spaced from the second bearing 64. The third bearing 74 is again in the form of a roller bearing, and is mounted to static structure in the form of a turbine exhaust casing 76 provided axially rearwardly of the low pressure turbine 26. The turbine exhaust casing 76 is again coupled to the engine core casing 60, and is also coupled to an engine core mount 78, which mounts the rear of the engine 10 to an engine pylon (not shown) when the engine 10 is installed on an aircraft. The turbine exhaust casing 76 is coupled to the third bearing 74 by a mounting arrangement comprising a support arm 80, which extends radially inwardly from the turbine exhaust casing 76 to the bearing 74, such that the bearing 74 is cantilevered forwardly and inwardly from the turbine exhaust casing 76. The third bearing 74 and support arm 80 are provided axially rearwardly of the low pressure turbine drive arm 68. Consequently, the third bearing 74 is mounted to the static engine core casing 60 via the turbine exhaust casing 74 and support arm 80.

The bearing arrangement ensures that relatively short unsupported regions A, B are provided, in spite of the relatively long high pressure compressor 20, thereby minimising susceptibility of the shaft to radial loads, displacements or vibration (whirl)l. In addition, the provision of the third bearing 74 axially spaced from the second bearing 64 ensures that bending is further minimised, as shown by comparing figures 2a and 2b.

Referring to figure 2a, there is provided a shaft bearing support configuration not in accordance with the present invention. In this arrangement, first and second bearings 38A, 64A are provided, which support forward and rearward ends of a shaft 34A respectively, and are spaced from the ends of the shaft 34A. As can be seen, since the shaft 34A is supported at two points only, the shaft 34A can bend to a high degree, since the ends of the shaft 34A are simply supported (providing little or no resistance to shaft bending)(though it will be understood that bending is exaggerated relative to a real gas turbine engine shaft in order to aid clarity).

In contrast, figure 2b shows a schematic representation of the shaft bearing support configuration of the current disclosure. As can be seen, in addition to first and second bearings 38, 64, a third bearing 74 is provided rearwardly of the second bearing 64. The addition of the third bearing 74 provides additional radial support to the rearward end of the shaft 34 and provides additional resistance to shaft bending. Consequently, the shaft arrangement is less susceptible to radial loads, displacements or vibration (whirl) and can therefore be a lower weight than prior arrangements.

The low pressure shaft 34 further comprises a flexible input coupling 82 comprising an undulant shaft portion, which provides flexibility of the shaft 34 adjacent the coupling to the sun gear 50. Consequently, misalignment of the unsupported region forward of the first bearing 38 can be accommodated, and a fourth bearing at a forward end of the shaft 34 may be unnecessary.

The engine 10 further comprises a bearing arrangement to support the high pressure shaft 32, including first and second bearings 84, 86 provided at forward and rearward ends of the high pressure shaft 32, and configured to radially and axially support the high pressure shaft 32.

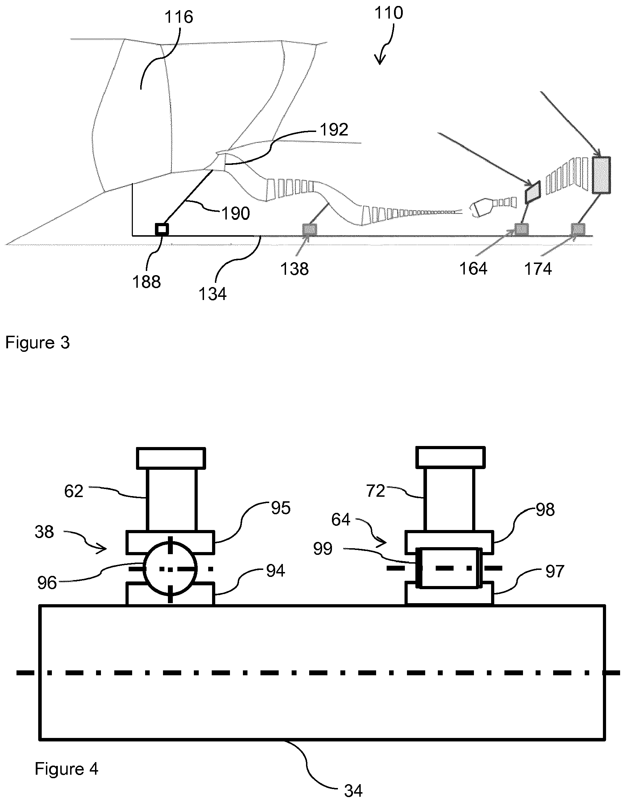

Figure 4 shows part of the bearing arrangement, including the first and second bearings 38, 64 in more detail.

The thrust bearing 38 is in the form of a ball bearing, comprising inner and outer races 94, 95, which are fixed to and engage against the shaft 34 and support arm 62 respectively. Each race 94, 95 includes an arcuate contact surface, which engages against a spherical roller bearing 96, provided therebetween. The ball bearing rolls relative to each race 94, 95, and also reacts an axial force imposed on support arm 62 by the shaft 34 due to thermal expansion in view of the arcuate contact surfaces. Consequently, the end of the shaft 34 supported by the thrust bearing 38 is maintained in position in spite of thermal expansion.

Roller bearing 64 similarly includes inner and outer races 97, 98, with a cylindrical roller bearing 99 being provided therebetween. Each race 97, 98 comprises a flat (in an axial direction) contact surface which engages again the roller bearing 99. Consequently, the end of the shaft 34 supported by the roller bearings 64, 74 is allowed to move in an axial direction where the shaft 34 thermally expands or contracts. In general, it will be understood that the locations / types of bearings can be varied. For example, the thrust bearing could be provided in place of the roller bearing, and vice versa. In general, a single thrust bearing is provided for each shaft to provide for location of the respective shaft, with the remaining bearings being roller bearings to allow for thermal expansion / contraction. The thrust bearing could be at a forward end of the shaft, a rearward end of the shaft, or anywhere in between.

Figure 3 shows a second gas turbine engine 110. Features of engine 10 which are similar to those of engine 110 are given the same reference numerals, incremented by 100. This engine 110 is similar to the first engine 10, except that the reduction gearbox is omitted. Consequently, a low pressure shaft 134 is provided which directly couples a low pressure turbine 126 to a fan 116 in addition to a low pressure compressor 118. Again, first, second and third bearings 138, 164, 174 are provided, which support the low pressure shaft in a similar manner to that shown in figure 2a.

The engine 110 also comprises a fourth low pressure shaft support bearing 188, which partially supports a forward end of the shaft 134. The bearing 188 may be either a thrust bearing or a roller bearing. Where the bearing 188 is a thrust bearing, the first bearing 138 may comprise a roller bearing. The additional bearing 188 is mounted to a core inlet stator 192 via a support arm 190. The support arm is cantilevered from the stator 192, and extends axially forwardly and radially inwardly from the stator 192.

Another difference between the engine 10 and the engine 110 is the omission of the flexible input coupling - the low pressure shaft 134 is substantially stiff along its whole axial length.

Other gas turbine engines to which the present disclosure may be applied may have alternative configurations. By way of example such engines may have an alternative number of interconnecting shafts (e.g. three) and/or an alternative number of compressors and/or turbines.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. An aircraft gas turbine engine (10) comprising:
a high pressure compressor (20) coupled to a high pressure turbine (24) by a high pressure shaft (32);
a low pressure compressor (18) coupled to a low pressure turbine (26) by a low pressure shaft (34);
a first shaft bearing (38) configured to at least partially support a forward end of the low pressure shaft (34), the first shaft bearing (38) being mounted to a static structure (58) forward of the high pressure turbine (24);
a second shaft bearing (64) configured to at least partially support a rearward end of the low pressure shaft (34), the second shaft bearing (64) being mounted to a static structure (70) rearward of the high pressure turbine (24), and forward of the low pressure turbine (26); and
a third shaft bearing (74) configured to at least partially support the rearward end of the low pressure shaft (34), the third shaft bearing (74) being mounted to a static structure (70) rearward of the low pressure turbine (26).

2. An engine according to claim 1, wherein the first shaft bearing (38) comprises a thrust bearing configured to axially constrain the low pressure shaft (34).

3. An engine according to claim 2, wherein the first shaft bearing (38) is in the form of a ball bearing assembly.

4. An engine according to any of the preceding claims, wherein the second and / or third shaft bearing (64, 74) is in the form of a roller bearing configured to permit axial movement of the rearward end of the low pressure shaft (34).

5. An engine according to any of the preceding claims, wherein the first shaft bearing (38) is mounted to an inter-compressor casing (58) located axially between the high pressure compressor (20) and the low pressure compressor (18).

6. An engine according to any of the preceding claims, wherein the first shaft bearing (38) is located at an axial position corresponding to the inter-compressor casing (58).

7. An engine according to claim 6, wherein the first shaft bearing (38) is mounted to the inter-compressor casing (58) by a first bearing mounting arrangement comprising a support element (62) cantilevered from the inter-compressor casing (58) to the first shaft bearing (38).

8. An engine according to any of the preceding claims, wherein the second shaft bearing (64) is mounted to an inter-turbine casing located axially between the high pressure turbine and the low pressure turbine.

9. An engine according to claim 8, wherein the second shaft bearing (64) is mounted to the inter-turbine casing (70) by a second bearing mounting arrangement comprising a support element (72) cantilevered from the inter-turbine casing (70) to the second shaft bearing (64).

10. An engine according to any of the preceding claims, wherein the third shaft bearing (74) is mounted to a turbine exhaust casing (76) located axially rearwardly of the low pressure turbine (26).

11. An engine according to any of the preceding claims, wherein the third shaft bearing (74) is mounted to the turbine exhaust casing (76) by a third bearing mounting arrangement comprising a support element (80) cantilevered from the turbine exhaust casing (76) to the third shaft bearing (74).

12. An engine according to any of the preceding claims, wherein the engine (10) comprises a fan (13) arranged to be driven by the low pressure shaft (26) via a reduction gearbox (36).
